# FASCICULE DE BREVET EUROPEEN

(11) **EP 1 048 037 B1**
(45) Date de publication et mention de la délivrance du brevet: **29.05.2002**
(21) Numéro de dépôt: 99900516.8
(22) Date de dépôt: 12.01.1999
(51) Int. Cl.: G21C 7/24

(54) **MATERIAU ABSORBANT NEUTRONIQUE COMPOSITE ET PROCEDE DE FABRICATION DE CE MATERIAU**
NEUTRONENABSORBIERENDES VERBUNDMATERIAL UND HERSTELLUNGSVERFAHREN DAFÜR
ABSORBENT NEUTRONIC COMPOSITE MATERIAL AND METHOD FOR PRODUCING SAME

(30) Priorité: 13.01.1998 FR 9800240
(43) Date de publication de la demande: 02.11.2000
(73) Titulaire: COMMISSARIAT A L'ENERGIE ATOMIQUE, 75015 Paris Cédex 15 (FR)
(72) Inventeur: DESCHANELS, Xavier, F-91190 Gif-sur-Yvette (FR); BRY, Philippe, F-91120 Palaiseau (FR); KOCI, Jean-Pierre, F-78000 Versailles (FR); PROVOT, Bruno, F-91190 Saint-Aubin (FR)
(74) Mandataire: Audier, Philippe André
(86) Numéro de dépôt international: FR9900034
(87) Numéro de publication internationale: WO9936921

(56) Documents cités:
- EP-A- 0 364 650
- WO-A-94/28556
- DE-A- 1 564 226
- DE-A- 19 546 597
- DATABASE WPI Section Ch, Week 9102 Derwent Publications Ltd., London, GB; Class K05, AN 91-012861 XP002076608 & SE 8 901 091 A (ABB ATOM AB)
- DATABASE WPI Section Ch, Week 8740 Derwent Publications Ltd., London, GB; Class K05, AN 87-280513 XP002076609 & JP 62 194497 A (NIPPON KAKU NENRYO)

## Description

### Domaine technique de l'invention

L'invention se rapporte à un matériau absorbant neutronique composite et à un procédé de fabrication de ce matériau.

Les matériaux absorbants neutroniques sont des absorbeurs de neutrons. Ils trouvent par exemple une application dans la fabrication de barres de contrôle qui interviennent dans le contrôle de réactivité de réacteurs nucléaires, notamment dans le contrôle de réacteurs nucléaires à eau pressurisée (REP).

En effet, lors de la fission d'un noyau lourd dans le coeur d'un réacteur nucléaire, quelques neutrons sont émis à l'état libre. Le neutron est un projectile adéquat pour fissionner les noyaux lourds. Si parmi les neutrons émis certains ont une chance de rencontrer un noyau fissible et d'en provoquer la fission, ils génèrent à leur tour des descendants qui, eux-mêmes, peuvent provoquer la fission d'un autre noyau et donner naissance, de génération en génération, à une réaction en chaîne. Il apparaît donc important de contrôler la quantité de neutrons libres formés afin d'éviter que la réaction de fission s'emballe, et de maintenir cette fission dans un état critique, c'est-à-dire en équilibre.

Ainsi, les barres de contrôle comprenant les matériaux absorbants neutroniques sont des barres mobiles montées dans le coeur de réacteurs nucléaires de manière à pouvoir coulisser entre des assemblages de combustibles, ou dans un réseau de crayons combustibles d'un assemblage. Le contrôle de la fission du coeur se fait par l'insertion ou le retrait de ces barres du coeur du réacteur nucléaire par coulissement.

Les matériaux absorbants peuvent être utiles pour maintenir la fission nucléaire à l'état critique, ils constituent alors des barres de pilotage, ils peuvent être utiles pour assurer un arrêt rapide de la réaction en chaîne, ils constituent alors des barres de sécurité.

Pour être efficace dans le contrôle de réacteurs nucléaires, le matériau absorbant neutronique doit répondre aux critères de sélection suivants : il doit présenter une section efficace d'absorption des neutrons élevée, de bonnes caractéristiques mécaniques, une bonne tenue chimique et dimensionnelle en température et sous irradiation.

Dans certains cas, le matériau absorbant neutronique doit être recouvert d'une gaine, généralement en acier inoxydable. Il doit être compatible chimiquement avec cette gaine.

Par ailleurs, le coût des matières premières et de fabrication du matériau absorbant neutronique doit rester raisonnable.

### Art antérieur

Actuellement, les matériaux absorbants neutroniques les plus utilisés dans les barres de contrôle des réacteurs nucléaires à eau ordinaire pressurisée (REP) sont le carbure de bore (B₄C , et un alliage métallique d'argent, d'indium et de cadmium (AIC).

Ces matériaux présentent l'avantage d'avoir une section efficace d'absorption des neutrons qui répond au critère de sélection des matériaux absorbants neutroniques.

Le matériau absorbant au B₄C est utilisé sous forme d'empilements de pastilles cylindriques frittées, élaborées à partir de poudres.

Bien que présentant une grande inertie chimique le B₄C s'oxyde à partir de 600°C en présence d'oxygène. Ce composé est également sensible à la corrosion par l'eau du milieu primaire REP, notamment lorsqu'il a été irradié par des neutrons. C'est une des raisons pour lesquelles il est introduit dans des gaines généralement en acier inoxydable.

Par ailleurs, la durée de vie du carbure de bore n'atteint jamais la limite théorique fixée par l'épuisement du bore en raison d'un endommagement du matériau provoqué par la grande quantité d'hélium et de lithium formé par l'absorption neutronique. En effet, sous l'effet de la température, une fraction de l'hélium formé diffuse hors du matériau tandis que l'autre s'y accumule, provoquant un gonflement et une microfracturation du matériau.

La combinaison du gonflement et de la microfracturation du matériau peut provoquer pour de fortes irradiations, une interaction mécanique entre le matériau absorbant et la gaine d'acier pouvant entraîner la rupture de cette dernière, la gaine étant elle-même fragilisée par l'irradiation aux neutrons rapides d'une part, et par la diffusion d'une certaine quantité de bore et de carbure en provenance du matériau absorbant d'autre part.

Les matériaux absorbants AIC comprennent en masse environ 80% d'argent, 15% d'indium et 5% de cadmium. On utilise ces matériaux AIC dans des gaines cylindriques en acier inoxydable car ils résistent mal à la corrosion, aux températures de service des réacteurs nucléaires, dans une eau contenant incidemment de l'oxygène.

L'AIC présente de bonnes propriétés physiques et chimiques sous irradiation, et les modifications subies par ce matériau au cours de l'absorption neutronique sont considérées comme acceptables pour les barres de contrôle des réacteurs REP actuels. Cependant, la très basse température de fusion de ce matériau et le coût de l'argent qu'il contient sont des inconvénients non négligeables pour l'utilisation de ce matériau dans le contrôle des réacteurs nucléaires.

Les matériaux B₄C et AIC ne répondent donc pas de manière très satisfaisante aux critères de sélection énoncés précédemment.

### Exposé de l'invention

La présente invention a précisément pour but de fournir un matériau absorbant neutronique qui permet de résoudre les problèmes évoqués ci-dessus, ainsi qu'un procédé de fabrication dudit matériau.

Selon l'invention, le matériau absorbant neutronique est un matériau composite comprenant du diborure de hafnium et du dioxyde de hafnium.

Selon l'invention, le diborure de hafnium peut représenter de préférence au moins 80% en volume du matériau, de préférence environ 90% en volume du matériau.

Selon l'invention, le dioxyde de hafnium peut représenter de préférence jusqu'à 20% en volume du matériau, de préférence environ 10% en volume du matériau.

Selon l'invention, le diborure de hafnium peut être sous forme de particules dans le matériau composite, lesdites particules pouvant de préférence avoir un diamètre allant jusqu'à 50 µm environ.

Selon l'invention, le dioxyde de hafnium peut être sous forme de particules dans le matériau composite, lesdites particules pouvant de préférence avoir un diamètre allant jusqu'à 20 µm environ, de préférence allant jusqu'à 10 µm environ.

Selon l'invention, le matériau composite comprenant du diborure de hafnium et du dioxyde de hafnium de l'invention peut présenter de préférence une masse volumique d'environ 10000 à 11000 kg/m³, de préférence d'environ 10550 à 10630 kg/m³ et de préférence encore d'environ 10590 kg/m³.

Le matériau absorbant neutronique conforme à l'invention présente l'avantage d'une plus grande résistance vis-à-vis de la corrosion par l'eau du milieu primaire REP, c'est-à-dire contenant au maximum une teneur de 2500 ppm de bore dissous et 2,5 ppm de lithium dissous, à une température d'environ 345°C et à une pression d'environ 155 bars, se traduisant par une dissolution quasi-nulle de bore dans l'eau.

Un autre avantage du matériau selon l'invention est qu'il conserve son intégrité après un essai de corrosion d'une durée de 1000 heures à une température de 345°C et à une pression de 15,5x10⁶ Pa dans une eau représentative de celle du milieu primaire REP.

Un autre avantage du matériau selon l'invention a été mis en évidence par des essais réalisés sur un matériau de HfB₂ pur à une température de 345°C et à une pression de 15,5x10⁶ Pa dans une eau représentative de celle du milieu primaire REP. Ces essais ont montré une fracturation de ce matériau causée par une formation de piqûres de corrosion riches en oxygène, appelée phase oxyde, dans la masse de la pastille. En effet, ces piqûres ont généré des contraintes internes, du fait d'une différence de masse volumique entre la phase oxyde et la phase borure, qui ont entraîné la fracturation des pastilles.

Dans le cas du matériau composite selon l'invention, des piqûres de corrosion se sont également formées mais elles étaient de dimensions beaucoup plus réduites, car leur développement a été bloqué par la présence du dioxyde de hafnium qui a limité leur propagation.

Ce résultat se traduit par une ténacité du matériau composite de la présente invention supérieure à celle de HfB₂ pur.

Le matériau absorbant neutronique composite selon l'invention peut être décrit comme comprenant une matrice homogène de diborure de hafnium (HfB₂) dans laquelle sont dispersées de façon homogène de fines particules de dioxyde de hafnium (HfO₂)

La présente invention se rapporte également à un procédé de fabrication d'un matériau absorbant neutronique, ledit matériau absorbant neutronique étant un matériau composite comprenant du diborure de hafnium.

Ce procédé comprend les étapes consistant dans cet ordre à :
- ajouter à une poudre de diborure de hafnium une poudre de dioxyde de hafnium,
- mélanger la poudre de diborure de hafnium et la poudre de dioxyde de hafnium de manière à obtenir un mélange homogène, et
- fritter le mélange homogène obtenu de manière à obtenir le matériau composite.

Selon le procédé de l'invention, on peut ajouter jusqu'à 20% en volume de dioxyde de hafnium, de préférence environ 10% en volume de dioxyde de hafnium, le mélange homogène des poudres de diborure de hafnium et de dioxyde de hafnium représentant 100% en volume.

Selon le procédé de l'invention, la poudre de diborure de hafnium peut avoir de préférence une granulométrie allant jusqu'à 50 µm environ.

Selon le procédé de l'invention, la poudre de dioxyde de hafnium peut avoir de préférence une granulométrie allant jusqu'à 20 µm environ, de préférence encore jusqu'à 10 µm environ.

Selon le procédé de l'invention, le mélange de la poudre de diborure de hafnium et de dioxyde de hafnium peut être réalisé par n'importe quel moyen connu de l'homme du métier pour obtenir un mélange homogène de telles poudres. De préférence, le mélange de ces poudres peut être réalisé par application d'ultrasons à une barbotine comprenant lesdites poudres dispersées dans un liquide de dispersion.

Le liquide de dispersion est de préférence un liquide qui après le mélange des poudres pourra être éliminé facilement par exemple par évaporation. Ce liquide de dispersion peut être par exemple un alcool tel que de l'éthanol.

Lorsqu'un mélange homogène des poudres est obtenu, il peut être séché par exemple par évaporation de l'alcool puis il peut être tamisé afin d'éliminer d'éventuels agrégats de poudre dans le mélange.

Le mélange homogène obtenu est alors fritté pour obtenir le matériau composite.

Selon l'invention, le frittage peut être réalisé sous vide.

Selon l'invention, le mélange peut être fritté dans n'importe quel moule adéquat pour fritter de telles poudres, par exemple un moule en graphite de préférence chemisé par une feuille de graphite.

Le chemisage du moule permet d'éviter une diffusion d'espèces chimiques du mélange vers le moule et facilite le démoulage ultérieur du matériau composite.

Le moule peut par exemple avoir une forme adéquate pour un moulage du matériau sous forme de pastille, de plaque, de croix, de crayon et de manière générale sous une forme appropriée pour constituer des barres de contrôle d'un réacteur nucléaire.

Le frittage du mélange est réalisé dans des conditions de température, pression et durée qui permettent de densifier correctement les deux matériaux, il peut par exemple être effectué à une température d'environ 1600 à 2100°C, de préférence à une température d'environ 1900°C, sous une pression de 10 à 100 MPa, de préférence d'environ 83 MPa, pendant une durée d'environ 15 à 90 minutes, de préférence d'environ 1 heure, par exemple dans un four maintenu sous vide dynamique.

A l'issue de ce frittage, ou traitement thermique, le matériau composite obtenu peut être usiné par exemple à l'aide d'outils diamantés. En effet, la zone corticale du matériau composite peut présenter de fines fissures dues à une réaction chimique entre l'oxyde HfO₂ présent dans le matériau et le moule par exemple un moule de graphite. Cette zone corticale peut être enlevée par usinage sur une profondeur de 500 à 1000 µm, de préférence de 750 µm.

Le procédé de l'invention permet notamment un abaissement de la température de frittage du matériau composite d'environ 200°C comparativement à celle du diborure de hafnium pur.

D'autres caractéristiques et avantages apparaîtront mieux à la lecture des exemples suivants donné bien entendu à titre illustratif en référence aux dessins annexés.

### Description des figures

La figure 1 est une représentation graphique de l'influence de la teneur en HfO₂ sur la température de frittage d'un mélange de poudres de HfB₂ et de HfO₂ selon l'invention.

La figure 2 est une représentation graphique de cinétiques de corrosion de diborure de hafnium pur et de matériaux selon l'invention.

### Exemples

### Exemple 1 : Fabrication d'un matériau composite selon l'invention

On a mélangé 90,9 g d'une poudre de diborure de hafnium ayant une granulométrie moyenne inférieure à 50 µm, et 9,1 g d'une poudre de dioxyde de hafnium ayant une granulométrie moyenne inférieure à 20 µm, soit 90% en volume de diborure de hafnium et 10% en volume de dioxyde de hafnium.

Le mélange a été effectué de façon aussi homogène que possible par application d'ultrasons à une barbotine constituée des deux poudres dispersées dans de l'éthanol.

Le mélange a ensuite été séché dans une étuve chauffée à 80°C puis tamisé avec un tamis ayant des mailles de 60 microns. Une masse de 8 g du mélange a été introduite dans un moule en graphite de 9,5 mm de diamètre. Deux pistons en graphite bouchent les extrémités du moule préalablement chemisé par une feuille de graphite, et permettant d'appliquer la pression sur la poudre.

L'ensemble mélange et moule a été porté à une température de 1900°C sous une pression de 83 MPa pendant une heure dans un four maintenu sous vide dynamique. On a obtenu des pastilles de 9,5 mm de diamètre et de 12 mm de hauteur.

La zone corticale de ces pastilles présentait de fines fissures dues à une réaction chimique entre HfO₂ présent dans le mélange et le graphite du moule. Cette zone corticale a été retirée par usinage à l'aide d'outils diamantés sur une épaisseur de 750 microns pour la surface cylindrique de la pastille et de 1000 microns pour les extrémités.

Les pastilles obtenues présentaient une densité finale égale à 95% de la densité théorique, soit une masse volumique de 10590 kg/m³.

### Exemple 2 : Influence de la quantité de dioxyde de hafnium sur la température de frittage d'un mélange de HfB₂ et de HfO₂ selon l'invention

Dans les mêmes conditions que celles de l'exemple 1, on a fritté différents mélanges de poudres de diborure de hafnium et de dioxyde de hafnium comprenant 0, 5, 10 et 20% en volume de dioxyde de hafnium, et on a mesuré la densité du matériau composite obtenu à partir de chaque mélange, en fonction de la température de frittage de ces différents mélanges.

Pour chaque mélange, on a calculé une densité relative (dr) en % du matériau composite obtenu après frittage, en calculant le rapport de la densité mesurée et de la densité théorique après frittage.

Le tableau 1 suivant regroupe les résultats de cet exemple.

**Tableau 1**

| Température de frittage en °C | 1700 | 1800 | 1850 | 1900 | 2000 | 2100 |
|---|---|---|---|---|---|---|
| dr en % HfO₂ 0 %en volume | - | - | - | 74 | 91 | 96 |
| dr en % HfO₂ 5% en volume | - | - | - | 87 | 93 | - |
| dr en % HfO₂ 10% en volume | 76 | 89 | - | 95 | - | - |
| dr en % HfO₂ 20% en volume | 81 | 93 | 97 | - | - | - |

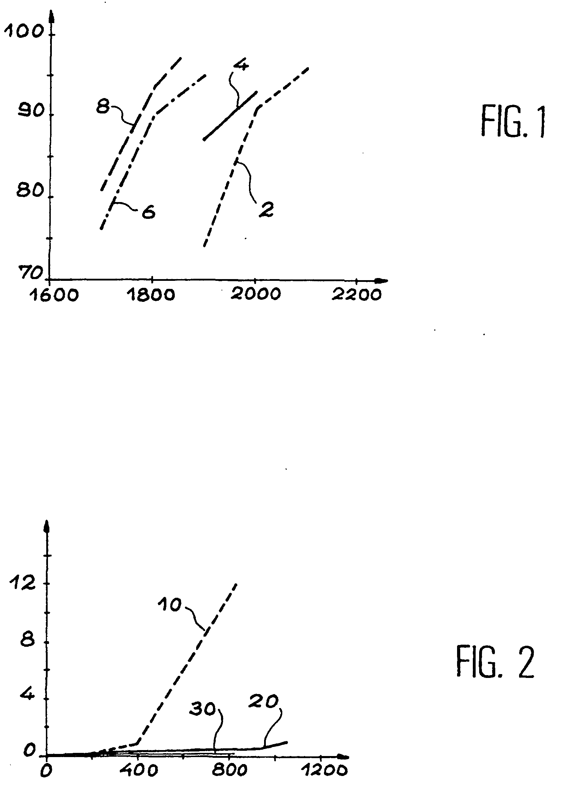

Sur la figure 1, on a reporté les valeurs du tableau 1 de manière à construire un graphique de densité relative en % du matériau composite en fonction de la température pour une concentration de 0% en volume de HfO₂ dans le mélange : courbe de référence 2, de 5% en volume de HfO₂ dans le mélange : courbe de référence 4, de 10% en volume de HfO₂ dans le mélange : courbe de référence 6, et de 20% en volume de HfO₂ : courbe de référence 8. Cette figure met en évidence l'influence de la teneur en HfO₂ sur la température de frittage d'un mélange de poudres de HfB₂ et de HfO₂ selon l'invention.

Les résultats de cet exemple montrent en particulier qu'une poudre de HfB₂ pure nécessite pour être frittée une température d'environ 200°C plus élevée que celle nécessaire pour un mélange comprenant du diborure de hafnium et 10% en volume de dioxyde de hafnium.

Ces résultats montrent de manière plus générale que lorsqu'on augmente la teneur en HfO₂ dans un mélange de poudres de HfB₂ et HfO₂, on abaisse la température de frittage.

Des mesures ont montré que selon les paramètres de frittage utilisés, c'est-à-dire la pression, la température et la durée, les pastilles formées peuvent avoir une densité relative qui varie entre 80 et 99% de la densité théorique du mélange de départ.

### Exemple 3 : cinétiques de corrosion d'un matériau selon l'invention

Des essais de corrosion ont été effectués dans des conditions représentatives de celles de l'eau d'un milieu primaire dans un réacteur de type REP, c'est-à-dire à une température de 345°C et une pression de 155 bars.

Ces essais ont été réalisés en autoclave, sur des matériaux composites selon l'invention et comprenant en volume 0% HfO₂ pour les essais ci-après notés essais 1, 10% HfO₂ pour les essais notés essais 2 et 20% HfO₂ pour les essais notés essais 3.

Le tableau 2 suivant regroupe les résultats des mesures obtenues dans cet exemple.

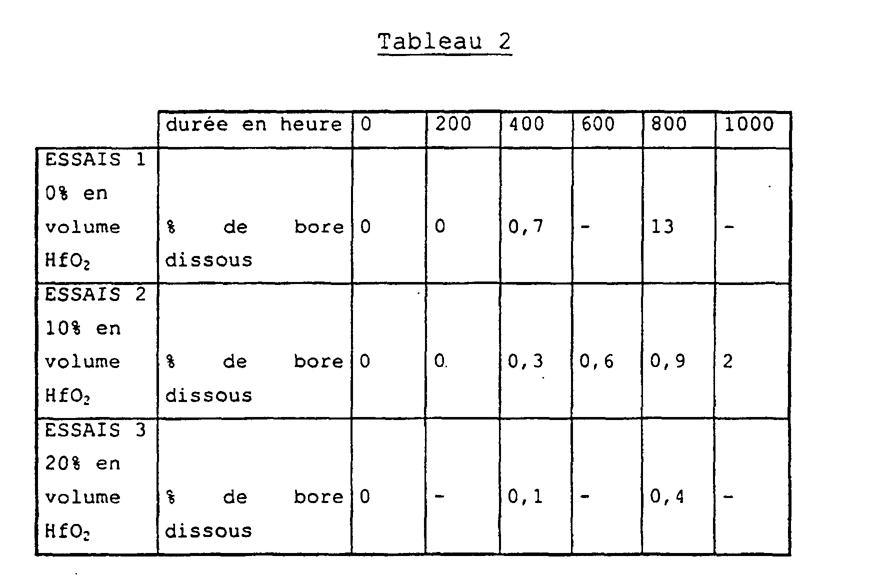

La figure 2 est une représentation graphique des résultats du tableau 2.

Sur cette figuré 2, les essais 1 correspondent à la courbe de référence 10, les essais 2 correspondent à la courbe de référence 20 et les essais 3 correspondent à la courbe de référence 30.

Ces essais montrent que dans le cas du matériau composite selon l'invention, c'est-à-dire comprenant un mélange HfB₂ et HfO₂, il y a une dissolution quasi-nulle du bore dans l'eau.

Le composite HfB₂/HfO₂ selon l'invention montre donc un meilleur comportement vis-à-vis de la corrosion par l'eau que HfB₂ pur.

### Exemple 4 : mesure de la ténacité d'un matériau selon l'invention

La ténacité est la grandeur macroscopique caractérisant la résistance à la propagation des fissures dans un matériau. Il s'agit de la valeur critique du facteur d'intensité de contraintes calculé au niveau d'une préfissure introduite dans le matériau étudié (créant ainsi un défaut critique de taille très supérieure à celle de tous les autres défauts existant naturellement dans l'éprouvette).

L'essai de double torsion choisi dans notre cas pour mesurer la ténacité consiste à pratiquer une entaille de 3 mm dans une plaque rectangulaire (longueur 35 mm x largeur 17 mm x épaisseur 2 mm) et d'affiner la pointe de cette entaille par des indentations Knoop successives selon l'axe médian long de l'éprouvette. Les caractéristiques du défaut ainsi créé doivent être aussi proches que possible de celles d'un défaut naturel, et en particulier, le rayon de courbure en fond d'entaille doit être très faible. La fissure s'amorce sous le point d'application de la charge à partir de la préfissure et se propage le long de l'axe de l'éprouvette.

L'essai consiste alors de mettre en flexion trois points l'extrémité de la plaque de manière à procéder à l'ouverture de la fissure pour provoquer sa propagation en contrôlant la contrainte imposée et en enregistrant le déplacement sous l'extrémité de l'entaille. La plaque est en appui sur quatre appuis ponctuels et la charge est transmise par un appui également ponctuel à l'extrémité de la préfissure.

La procédure de l'essai consiste à imposer à l'éprouvette une flèche qui croît à vitesse constante (5 µm/min.).

La mesure de la charge critique P_{c} provoquant la propagation de la fissure permet donc alors de calculer la ténacité.

**Tableau 3 :**

| ténacité des deux matériaux | |
|---|---|
| Matériaux | Ténacité K_{IC} 10⁶(Pa/m⁰⁵) |
| HfB₂ | 3,15 |
| HfB₂+10% HfO₂ | 5,1 |

Ces résultats montrent une ténacité plus importante pour le matériau composite HfB₂/HfO₂ que pour un matériau HfB₂ pur.

## Revendications

1. Matériau absorbant neutronique, **caractérisé en ce que** ledit matériau est un matériau composite comprenant du diborure de hafnium et du dioxyde de hafnium.

2. Matériau selon la revendication 1, dans lequel le diborure de hafnium représente au moins 80% en volume du matériau.

3. Matériau selon la revendication 1, dans lequel le diborure de hafnium représente environ 90% en volume du matériau.

4. Matériau selon l'une quelconque des revendications 1 à 3, dans lequel le dioxyde de hafnium représente jusqu'à 20% en volume du matériau.

5. Matériau selon l'une quelconque des revendications 1 à 3, dans lequel le dioxyde de hafnium représente environ 10% en volume du matériau.

6. Matériau selon l'une quelconque des revendications précédentes, dans lequel le diborure de hafnium est sous forme de particules ayant un diamètre allant jusqu'à 50 µm environ.

7. Matériau selon l'une quelconque des revendications précédentes, dans lequel le dioxyde de hafnium est sous forme de particules ayant un diamètre allant jusqu'à 20 µm environ.

8. Matériau selon l'une quelconque des revendications précédentes, dans lequel le dioxyde de hafnium est sous forme de particules ayant un diamètre allant jusqu'à 10 µm environ.

9. Matériau selon la revendication 1 présentant une masse volumique d'environ 10000 à 11000 kg/m³.

10. Matériau selon la revendication 1 présentant une masse volumique d'environ 10550 à 10630 kg/m³.

11. Procédé de fabrication d'un matériau absorbant neutronique, ledit matériau absorbant neutronique étant un matériau composite comprenant du diborure de hafnium, ledit procédé comprenant les étapes consistant dans cet ordre à :
- ajouter à une poudre de diborure de hafnium, une poudre de dioxyde de hafnium,
- mélanger la poudre de diborure de hafnium et la poudre de dioxyde de hafnium de manière à obtenir un mélange homogène, et
- fritter le mélange homogène de manière à obtenir le matériau composite.

12. Procédé selon la revendication 11, dans lequel on ajoute jusqu'à 20% en volume de dioxyde de hafnium, le mélange homogène des poudres de diborure de hafnium et de dioxyde de hafnium représentant 100% en volume.

13. Procédé selon la revendication 11, dans lequel on ajoute environ 10% en volume de dioxyde de hafnium, le mélange homogène des poudres de diborure de hafnium et de dioxyde de hafnium représentant 100% en volume.

14. Procédé selon la revendication 12 ou 13, dans lequel la poudre de diborure de hafnium a une granulométrie allant jusqu'à 50 µm environ.

15. Procédé selon l'une quelconque des revendications 12 à 14, dans lequel la poudre de dioxyde de hafnium a une granulométrie allant jusqu'à 20 µm environ.

16. Procédé selon l'une quelconque des revendications 12 à 14, dans lequel la poudre de dioxyde de hafnium a une granulométrie allant jusqu'à 10 µm environ.

17. Procédé selon la revendication 11, dans lequel le mélange de la poudre de diborure de hafnium et de la poudre de dioxyde de hafnium est réalisé par application d'ultrasons à une barbotine comprenant lesdites poudres dispersées dans un liquide de dispersion.

18. Procédé selon la revendication 11, dans lequel le mélange homogène est fritté sous vide.

19. Procédé selon la revendication 11 ou 18, dans lequel le mélange homogène est fritté dans un moule en graphite chemisé par une feuille de graphite.

20. Procédé selon l'une quelconque des revendications 11 à 18, dans lequel le mélange est fritté à une température d'environ 1600 à 2100°C, sous une pression de 15 à 100 MPa pendant une durée d'environ 15 à 90 minutes.

21. Procédé selon l'une quelconque des revendications 11 à 18, dans lequel le mélange est fritté à une température d'environ 1900, sous une pression d'environ 83 MPa pendant une durée d'environ 1 heure.

22. Procédé selon la revendication 11 comprenant en outre une étape d'usinage du matériau composite sur une épaisseur d'environ 500 à 1000 µm.

## Patentansprüche

1. Neutronen absorbierendes Material, **dadurch gekennzeichnet, dass** das genannte Material ein Verbundmaterial ist, das Hafniumdiborid und Hafniumdioxid enthält.

2. Material nach Anspruch 1, in welchem das Hafniumdiborid mindestens 80 Vol.-% des Materials darstellt.

3. Material nach Anspruch 1, in welchem das Hafniumdiborid ungefähr 90 Vol.-% des Materials darstellt.

4. Material nach einem der Ansprüche 1 bis 3, in welchem das Hafniumdioxid bis zu 20 Vol.-% des Materials darstellt.

5. Material nach einem der Ansprüche 1 bis 3, in welchem das Hafniumdioxid ungefähr 10 Vol.-% des Materials darstellt.

6. Material nach einem der vorhergehenden Ansprüche, in welchem das Hafniumdiborid in Form von Partikeln vorliegt, die einen Durchmesser haben, der bis ungefähr 50 µm geht.

7. Material nach einem der vorhergehenden Ansprüche, in welchem das Hafniumdioxid in Form von Partikeln vorliegt, die einen Durchmesser haben, der bis ungefähr 20 µm geht.

8. Material nach einem der vorhergehenden Ansprüche, in welchem das Hafniumdioxid in Form von Partikeln vorliegt, die einen Durchmesser haben, der bis ungefähr 10 µm geht.

9. Material nach Anspruch 1, das eine Raummasse von ungefähr 10000 bis 11000 kg/m³ aufweist.

10. Material nach Anspruch 1, das eine Raummasse von ungefähr 10550 bis 10630 kg/m³ aufweist.

11. Verfahren zur Herstellung eines Neutronen absorbierenden Materials, wobei das genannte, Neutronen absorbierende Material ein Verbündmaterial ist, das Hafniumdiborid enthält, und das genannte Verfahren die Schritte umfasst, die - in dieser Reihenfolge - darin bestehen:
- ein Hafniumdioxid-Pulver einem Hafniumdiborid-Pulver zuzusetzen,
- das Hafniumdiborid-Pulver und das Hafniumdioxid-Pulver derart zu vermischen, dass eine homogene Mischung erhalten wird, und
- die homogene Mischung derart zu sintern, dass das Verbundmaterial erhalten wird.

12. Verfahren nach Anspruch 11, in welchem man bis zu 20 Vol.-% Hafniumdioxid zusetzt, wobei die homogene Mischung der Pulver von Hafniumdiborid und von Hafniumdioxid 100 Vol.-% darstellt.

13. Verfahren nach Anspruch 11, in welchem man ungefähr 10 Vol.-% Hafniumdioxid zusetzt, wobei die homogene Mischung der Pulver von Hafniumdiborid und von Hafniumdioxid 100 Vol.-% darstellt.

14. Verfahren nach Anspruch 12 oder 13, in welchem das Hafniumdiborid-Pulver eine Körnung hat, die bis ungefähr 50 µm geht.

15. Verfahren nach Anspruch 12 bis 14, in welchem das Hafniumdioxid-Pulver eine Körnung hat, die bis ungefähr 20 µm geht.

16. Verfahren nach Anspruch 12 bis 14, in welchem das Hafniumdioxid-Pulver eine Körnung hat, die bis ungefähr 10 µm geht.

17. Verfahren nach Anspruch 11, in welchem die Mischung des Hafniumdiborid-Pulvers und des Hafniumdioxid-Pulvers durch Anwendung von Ultraschall auf eine Aufschlämmung hergestellt wird, die die genannten Pulver dispergiert in einer Dispersionsflüssigkeit enthält.

18. Verfahren nach Anspruch 11, in welchem die homogene Mischung unter Vakuum gesintert wird.

19. Verfahren nach Anspruch 11 oder 18, in welchem die homogene Mischung in einer Form aus Graphit, ausgekleidet mit einer Folie von Graphit, gesintert wird.

20. Verfahren nach einem der Ansprüche 11 bis 18, in welchem die Mischung bei einer Temperatur von ungefähr 1600 bis 2100°C unter einem Druck von 15 bis 100 MPa während einer Zeitdauer von ungefähr 15 bis 90 Minuten gesintert wird.

21. Verfahren nach einem der Ansprüche 11 bis 18, in welchem die Mischung bei einer Temperatur von ungefähr 1900°C unter einem Druck von ungefähr 83 MPa während einer Zeitdauer von ungefähr 1 Stunde gesintert wird.

22. Verfahren nach Anspruch 11, ferner einen Schritt der Bearbeitung des Verbundmaterials auf eine Dicke von ungefähr 500 bis 1000 µm umfassend.

## Claims

1. Neutron absorbent material, **characterized in that** said material is a composite material comprising hafnium diboride and hafnium dioxide.

2. Material according to Claim 1, in which the hafnium diboride represents at least 80% by volume of the material.

3. Material according to Claim 1, in which the hafnium diboride represents about 90% by volume of the material.

4. Material according to any one of Claims 1 to 3, in which the hafnium dioxide represents up to 20% by volume of the material.

5. Material according to any one of Claims 1 to 3, in which the hafnium dioxide represents about 10% by volume of the material.

6. Material according to any one of the preceding Claims, in which the hafnium diboride is in the form of particles having a diameter ranging up to about 50 µm.

7. Material according to any one of the preceding Claims, in which the hafnium dioxide is in the form of particles having a diameter ranging up to about 20 µn.

8. Material according to any one of the preceding Claims, in which the hafnium dioxide is in the form of particles having a diameter ranging up to about 10 µm.

9. Material according to claim 1 having a density of about 10000 to 11000 kg/m³.

10. Material according to claim 1 having a density of about 10550 to 10630 kg/m³.

11. Method of manufacturing a neutron absorbent material, said neutron absorbent material being a composite material comprising hafnium diboride, said method comprising steps that consist of, in this order:
- adding hafnium dioxide powder to hafnium diboride powder,
- mixing the hafnium diboride powder and the hafnium dioxide powder in a way that produces a homogeneous mixture, and
- sintering the homogeneous mixture in a way that produces the composite material.

12. Method according to claim 11, in which, up to 20% by volume of hafnium dioxide is added, the homogeneous mixture of the hafnium diboride and hafnium dioxide representing 100% by volume.

13. Method according to claim 11, in which, about 10% by volume of hafnium dioxide is added, the homogeneous mixture of the hafnium diboride and hafnium dioxide representing 100% by volume.

14. Method according to claim 12 or 13, in which the hafnium diboride powder has a particle size ranging up to about 50 µm.

15. Method according to any one of claims 12 to 14, in which the hafnium dioxide powder has a particle size ranging up to about 20 µm.

16. Method according to any one of claims 12 to 14, in which the hafnium dioxide powder has a particle size ranging up to about 10 µm.

17. Method according to claim 11, in which the mixture of the hafnium diboride powder and hafnium dioxide powder is produced by the application of ultrasound to a slip comprising said powders dispersed in a dispersion liquid.

18. Method according to claim 11, in which the homogeneous mixture is sintered under vacuum.

19. Method according to claim 11 or 18, in which the homogeneous mixture is sintered in a graphite mold lined with a sheet of graphite.

20. Method according to any one of claims 11 to 18, in which the mixture is sintered at a temperature of from about 1600 to 2100°C, under a pressure of from 15 to 100 MPa for a period of about 15 to 90 minutes.

21. Method according to any one of claims 11 to 18, in which the mixture is sintered at a temperature of about 1900°C, under a pressure of about 83 MPa for a period of about 1 hour.

22. Method according to claim 11 comprising additionally a step of machining the composite material over a thickness of about 500 to 1000 µm.
